# FASCICULE DE BREVET EUROPEEN

(11) **EP 0 930 175 B1**
(45) Date de publication et mention de la délivrance du brevet: **25.09.2002**
(21) Numéro de dépôt: 98403348.0
(22) Date de dépôt: 31.12.1998
(51) Int. Cl.: B60B 3/16, F16B 35/04

(54) **Vis pour la fixation d'une roue de véhicule automobile, en alliage léger ou en tôle**
Schraube zur Befestigung eines Fahrzeugrades aus Leichtmetall oder Blech
Screw for fastening a vehicle wheel of light alloy or sheet metal

(30) Priorité: 20.01.1998 FR 9800565
(43) Date de publication de la demande: 21.07.1999
(73) Titulaire: AUTOMOBILES PEUGEOT, 75116 Paris (FR); AUTOMOBILES CITROEN, 92200 Neuilly-sur-Seine (FR)
(72) Inventeur: Engelvin, Pierre, 78000 Versailles (FR); Billault, Patrice, 91240 Gometz Le Chatel (FR); Demontant, Daniel, 91000 Ebry (FR); Moreau, Eric, 91519 Lardy (FR)
(74) Mandataire: Bentz, Jean-Paul

(56) Documents cités:
- DE-A- 3 027 191
- DE-U- 9 409 314
- FR-A- 2 687 183
- GB-A- 2 123 510
- US-A- 4 898 429
- US-A- 5 542 753

## Description

L'invention concerne un système pour la fixation d'une roue sur un véhicule automobile, ce système convenant à une roue en alliage léger, comme l'aluminium.

Plus précisément, l'invention concerne un système tel que défini dans le préambule de la revendication 1.

Pour d'évidentes raisons de sécurité, il est nécessaire de garantir la fiabilité de la fixation des roues sur un véhicule automobile.

De façon connue, des vis monobloc à portée conique sont utilisées pour fixer des roues en tôle d'acier qui comportent des perçages à portée conique, en assurant la robustesse de l'assemblage vissé. En particulier, la roue présente une forme particulière autour du perçage conique, choisie pour obtenir une élasticité dans la roue.

Par ailleurs, une roue en alliage léger comporte classiquement des perçages à portée plate et peut être fixée sur un véhicule automobile avec des vis à portée plate, une rondelle élastique solidaire de la vis étant intercalée entre la vis et la roue. Cette solution est retenue car elle est également fiable et robuste.

Cependant, elle présente l'inconvénient d'être onéreuse.

En effet, les quatre roues principales d'un véhicule automobile sont généralement en alliage léger, tandis que la roue de secours est en tôle, pour des raisons d'économie.

Pour leur fixation, ces deux types de roues nécessitent donc des vis différentes. Cependant, pratiquement, on ne peut pas prévoir des vis différentes pour la roue de secours car le risque d'inversion est important et ses conséquences sont trop dangereuses pour l'utilisateur du véhicule. En effet, si une roue en alliage léger est fixée avec des vis à portée conique, la roue sera perdue très rapidement car ces vis n'auront pas assez de filets en prise. Par ailleurs, des vis à portée plate ne permettent pas de fixer une roue en tôle.

La solution retenue jusqu'ici par les demanderesses est d'adapter la roue de secours en tôle, lorsque les quatre roues principales sont en alliage, afin de permettre sa fixation avec des vis à portée plate.

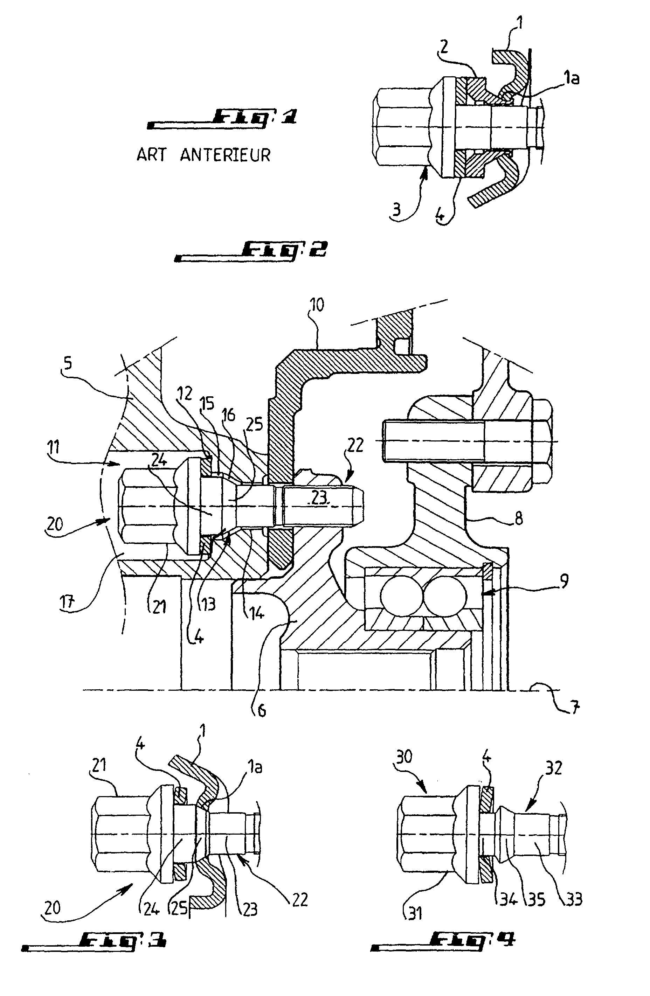

Cette solution est illustrée sur la figure 1. Des inserts 2 sont ajoutés sur la roue en tôle 1 par soudure ou sertissage, au niveau des perçages coniques la de la roue. Ces inserts présentent une portée extérieure conique en contact avec le perçage conique de la roue et une portée plate destinée à une vis à portée plate. Ils permettent donc de rendre la roue 1 compatible avec une vis classique 3 à portée plate. La fixation avec des vis à portée conique n'est par contre plus possible. Une rondelle élastique 4 solidaire de la vis est classiquement placée entre la tête de vis et chaque insert.

Ces inserts permettent d'obtenir une fixation fiable en utilisant les mêmes vis à portée plate pour les quatre roues principales et la roue de secours, mais cette solution est très coûteuse.

L'invention a pour but de pallier ces inconvénients en proposant un système pouvant fixer de façon fiable une roue de véhicule automobile réalisée en alliage léger, comme une roue en tôle.

A cette fin, le système de l'invention, par ailleurs conforme à la définition générique qu'en donne le préambule de la revendication 1, se distingue par les caractéristiques spécifiques énoncées dans cette revendication.

De façon préférée, la partie cylindrique du corps de la vis est apte à recevoir une rondelle élastique.

Dans ce cas, la partie cylindrique de la vis comporte de préférence des stries à proximité de la tête, pour le maintien de la rondelle élastique sur le corps de la vis.

Dans une première variante de réalisation, le diamètre de la partie cylindrique du corps de la vis est supérieur ou égal au plus grand diamètre de la partie conique.

Dans une deuxième variante de réalisation, le diamètre de la partie cylindrique du corps de la vis est inférieur au plus grand diamètre de la partie conique.

L'invention sera mieux comprise et d'autres buts, avantages et caractéristiques de celle-ci apparaîtront plus clairement à la lecture de la description qui suit et qui est faite au regard des dessins annexés qui représentent des modes non limitatifs de réalisation de l'invention et sur lesquels :
La figure 2 est une vue partielle en coupe, selon l'axe de la roue, d'une roue en alliage léger fixée à l'aide d'une vis selon l'invention.
La figure 3 est une vue partielle en coupe d'une roue en tôle fixée à l'aide d'une vis selon l'invention.
La figure 4 est une vue en coupe axiale d'un autre mode de réalisation d'une vis selon l'invention.

Les éléments communs aux différentes figures seront désignés par les mêmes repères.

La roue 5 en alliage léger, par exemple en aluminium, est fixée au moyen d'au moins une vis 20 sur le moyeu 6. Le repère 7 désigne l'axe de la roue.

Le moyeu 6 est monté tournant par rapport au pivot 8 grâce à un roulement 9.

Le repère 10 désigne le disque de frein, sur lequel la partie centrale de la roue prend appui.

La roue 5 comporte un perçage 11 pour le passage de la vis 20.

Ce perçage comporte un premier évidement cylindrique 17 qui débouche sur la face extérieure de la roue et définit une partie annulaire 12 entourant un deuxième évidement 13 sensiblement cylindrique traversant la roue.

La partie annulaire du perçage est située au fond du premier évidement 17, sur la face extérieure de la roue.

De façon plus précise, l'évidement 13 comporte, entre la partie annulaire 12 du perçage et sa partie cylindrique 14 qui débouche sur la face intérieure de la roue, une première partie cylindrique 15 de plus grand diamètre que la partie cylindrique 14 et une partie conique 16 reliant les deux parties cylindriques 14 et 15.

Par rapport à une roue en alliage léger classique, le perçage 11 est légèrement modifié pour permettre l'utilisation de la vis 20 selon l'invention. En effet, dans une roue en alliage léger classique, l'évidement 13 est constitué d'une partie cylindrique, raccordée à la partie annulaire qui l'entoure par un chanfrein.

La vis 20 selon l'invention comporte une tête 21 à portée plate et un corps 22.

Le corps 22 comporte une partie cylindrique 23 qui est au moins en partie filetée pour permettre le vissage de la vis 20 dans le moyeu 6. Cette partie cylindrique 23 est reliée à la tête 21 de la vis 20 par l'intermédiaire d'une autre partie cylindrique 24 et d'une partie conique 25 reliant les deux parties cylindriques 23 et 24.

Comme l'illustre la figure 2, c'est la partie cylindrique 24 qui est raccordée à la tête 21.

Dans l'exemple illustré à la figure 2, le diamètre de la partie cylindrique 24 correspond au plus grand diamètre de la partie conique 25, tandis que le plus petit diamètre de la partie conique 25 correspond au diamètre de la partie cylindrique 23.

Le diamètre de la partie cylindrique 24 peut également être supérieur au plus grand diamètre de la partie conique 25.

Lorsque la vis 20 est vissée dans le moyeu 6, comme illustré à la figure 2, la tête 21 de la vis 20 à portée plate vient en contact avec la partie annulaire 12 du perçage 11 pratiqué dans la roue 5. De préférence, une rondelle élastique 4 est interposée entre la tête de la vis et la partie annulaire 12 du perçage.

Ainsi, la partie cylindrique 24 du corps de la vis 20 est apte à recevoir une telle rondelle élastique 4. De préférence, elle comporte des stries (non illustrées) à proximité de la tête 21. Ces stries permettent l'arrêt de la rondelle 4 sur la vis 20 afin de rendre la rondelle imperdable.

Par ailleurs, le perçage 11 pratiqué dans la roue 5 est conçu pour recevoir le corps 22 de la vis. Ainsi, le diamètre de la partie cylindrique 15 de l'évidement 13, comme le diamètre de la partie cylindrique 14, sont choisis de façon appropriée.

La vis 20 à portée plate permet d'obtenir un assemblage vissé robuste grâce à la présence d'une réserve élastique dans la rondelle 4.

On se réfère maintenant à la figure 3 qui illustre la fixation d'une roue en tôle par l'intermédiaire de la vis 20 qui vient d'être décrite en référence à la figure 2.

De façon classique, la roue en tôle 1 comporte un perçage la de forme conique.

La vis 20 est introduite dans le perçage 1a de la roue en tôle 1 qui traverse la roue, et elle est vissée dans un trou taraudé prévu dans le moyeu 6.

Lorsque la vis 20 est vissée dans le moyeu, elle se trouve dans la position illustrée à la figure 3. La partie conique 25 du corps 22 de la vis vient ainsi en appui sur le perçage conique 1a.

La rondelle 4 prévue sur le corps de la vis ne vient pas en appui sur la roue 1.

Cependant, la vis 20 selon l'invention permet d'obtenir la fixation classique à portée conique des roues en tôle. La forme de la roue en tôle autour du perçage conique 1a est choisie pour obtenir une élasticité dans la roue qui garantit une bonne fiabilité de l'assemblage.

Les figures 2 et 3 montrent que la vis selon l'invention peut permettre de fixer indifféremment des roues en alliage léger présentant des perçages à portée plate et des roues en tôle présentant des perçages à portée conique.

Par ailleurs, avec la vis selon l'invention, la fiabilité de l'assemblage vissé correspond à celle que l'on obtient avec des vis classiques adaptées à chaque type de roue.

L'utilisation de la vis selon l'invention permet donc de s'affranchir des inserts qui sont normalement soudés ou sertis sur une roue en tôle pour permettre de la fixer de façon fiable avec des vis à portée plate.

La vis selon l'invention évite également tout risque d'inversion entre les vis spécifiques à un type de roue et contribue donc à la sécurité.

On se réfère maintenant à la figure 4 qui illustre un autre mode de réalisation de la vis selon l'invention.

Cette vis 30 comporte également une tête 31 à portée plate ainsi qu'un corps 32.

Ce corps 32 comporte une partie cylindrique 33 qui est au moins partiellement filetée pour permettre son vissage dans le moyeu. Cette partie cylindrique 33 est reliée à la tête 31 de la vis par une partie cylindrique 34 et une partie conique 35. La partie cylindrique 34 est reliée à la tête de la vis, tandis que la partie conique 35 relie les deux parties cylindriques 34 et 33.

Cette vis 30 diffère de la vis 20 illustrée aux figures 2 et 3 en ce que le diamètre de la partie cylindrique 34 est inférieur au plus grand diamètre de la partie conique 35.

On notera que, dans ce mode de réalisation, les stries ne sont plus nécessaires pour maintenir la rondelle élastique 4 car cette dernière est arrêtée par la partie conique 35.

La fabrication de la vis 30 est plus compliquée que celle de la vis 20. Elle présente cependant l'avantage de permettre d'utiliser des rondelles élastiques à portée plate présentant le même diamètre intérieur que celles utilisées pour les vis classiques à portée plate, le diamètre des deux parties cylindriques 34 et 33 étant choisi sensiblement identique.

Comme pour la vis 20 illustrée aux figures 2 et 3, la vis 30 permet d'assurer la fixation aussi bien d'une roue en alliage léger comportant des perçages à portée plate, qu'une roue en tôle comportant des perçages à portée conique. Dans le cas d'une roue en alliage léger, le perçage doit être adapté à la forme de la vis, comme cela a été décrit en référence à la figure 2 pour l'évidement 13.

L'invention n'est pas limitée aux modes de réalisation qui viennent d'être décrits et comprend au contraire tous leurs équivalents techniques.

Enfin, les signes de référence insérés après les caractéristiques techniques figurant dans les revendications ont pour seul but de faciliter la compréhension de ces dernières et ne sauraient en limiter la portée.

## Revendications

1. Système de fixation d'une roue en alliage léger sur un véhicule automobile, ce système comprenant un perçage de ladite roue et une vis dotée d'une tête à portée plate et d'un corps destiné à pénétrer dans ledit perçage, **caractérisé en ce que** le corps de la vis comporte une partie cylindrique (24, 34) et une partie conique (25, 35) qui s'étendent successivement et dans cet ordre depuis la tête (21, 31) de la vis (20, 30), et **en ce que** ledit perçage de la roue en alliage léger comporte un évidement cylindrique (17) qui débouche sur la face extérieure de la roue, ce dont il résulte que la vis peut être utilisée pour fixer, de façon fiable, aussi bien ladite roue en alliage léger comportant des perçages à portée plate qu'une roue en tôle d'acier présentant des perçages à portée conique.

2. Système de fixation suivant la revendication 1, **caractérisé en ce qu'**il comprend une rondelle élastique (4) engagée sur ladite partie cylindrique (24, 34).

3. Système de fixation suivant l'une quelconque des revendications 1 et 2, **caractérisé en ce que** ladite partie cylindrique (24, 34) comporte des stries à proximité de la tête (21).

4. Système de fixation suivant l'une quelconque des revendications 1 à 3, **caractérisé en ce que** le diamètre de ladite partie cylindrique (24) du corps (22) de la vis (20) est supérieur au plus grand diamètre de ladite partie conique (25).

5. Système de fixation suivant l'une quelconque des revendications 1 à 3, **caractérisé en ce que** le diamètre de ladite partie cylindrique (34) du corps (32) de la vis (30) est inférieur au plus grand diamètre de ladite partie conique (35).

## Claims

1. System for fastening a wheel made of a light alloy on a motor vehicle, said system including a perforation of said wheel and a screw provided with a broad-headed bearing head and a body intended to penetrate said perforation, **characterised in that** the body of the screw comprises a cylindrical portion (24, 34) and a conical portion (25, 35) both extending successively and in this order from the head (21, 31) of the screw (20, 30), and **in that** said perforation of the light alloy wheel comprises a cylindrical recess (17) which opens onto the external face of the wheel enabling the screw to be able to reliably fix both said light alloy wheel comprising flat bearing perforations and a sheet metal wheel having conical bearing perforations.

2. Fastening system according to claim 1, **characterised in that** it includes an elastic washer (4) engaged on said cylindrical portion (24, 34).

3. Fastening system according to claim 1 or 2, **characterised in that** said cylindrical portion (24, 34) comprises marks close to the head (21).

4. Fastening system according to one of claims 1 to 3, **characterised in that** the diameter of said cylindrical portion (24) of the body (22) of the screw (20) is larger than the largest diameter of said conical portion (25).

5. Fastening system according to one of claims 1 to 3, **characterised in that** the diameter of said cylindrical portion (34) of the body (32) of the screw (30) is smaller than the largest diameter of said conical portion (35).

## Patentansprüche

1. Befestigungssystem einer Fahrzeugrades aus Leichtmetall an einem Fahrzeug, wobei dieses System eine Bohrung des besagten Rades und eine mit einem Kopf mit flachem Bereich und einen zur Durchdringung in besagter Bohrung bestimmten Körper ausgestattete Schraube umfasst, **dadurch gekennzeichnet, dass** der Körper der Schraube einen zylindrischen Teil (24, 34) und einen konischen Teil (25, 35) umfasst, die sich nacheinander und in dieser Reihenfolge vom Kopf (21, 31) der Schraube (20, 30) erstrecken, und dass die besagte Bohrung des Rades aus Leichtmetall eine zylindrische Aussparung (17) umfasst, die auf der Außenseite des Rades ausmündet, woraus sich ergibt, dass die Schraube zur sicheren Befestigung sowohl des besagten Rades aus Leichtmetall mit Bohrungen mit flachem Bereich als auch eines Rad aus Leichtmetall mit Bohrungen mit konischem Bereich verwendet werden kann.

2. Befestigungssystem gemäß Anspruch 1, **dadurch gekennzeichnet, dass** es eine auf dem besagten zylindrischen Teil (24, 34) eingegriffene elastische Scheibe (4) umfasst.

3. Befestigungssystem gemäß Anspruch 1 und 2, **dadurch gekennzeichnet, dass** der besagte zylindrische Teil (24, 34) Rillen in der Nähe des Kopfes (21) umfasst.

4. Befestigungssystem gemäß Anspruch 1 bis 3, **dadurch gekennzeichnet, dass** der Durchmesser des besagten zylindrischen Teils (24) des Körpers (22) der Schraube (20) größer ist als der größte Durchmesser des besagten konischen Teils (25).

5. Befestigungssystem gemäß Anspruch 1 bis 3, **dadurch gekennzeichnet, dass** der Durchmesser des besagten zylindrischen Teils (34) des Körpers (32) der Schraube (30) kleiner ist als der größte Durchmesser des besagten konischen Teils (35).
